# EUROPEAN PATENT APPLICATION

(11) **EP 2 255 663 A2**
(43) Date of publication of application: **01.12.2010**
(21) Application number: 10250987.4
(22) Date of filing: 27.05.2010
(51) Int. Cl.: A21D 2/18, A21D 2/26, A21D 2/36, A21D 6/00, A21D 13/06, A21D 10/00

(54) **High fiber and high protein baked goods production**

(30) Priority: 27.05.2009 US 472865
(71) Applicant: Kraft Foods Global Brands LLC, Northfield, IL 60093 (US)
(72) Inventor: Karwowski, Jan, 306 Midland Park, New Jersey 07432 (US); Vemulapalli, Vani, Whippany, New Jersey 07981 (US); Okoniewska, Monika, Princetown, New Jersey 08540 (US); Beaver, Michelle D., Bloomfield, New Jersey 07003 (US); Cleary, Katherine, Cedar Knolls, New Jersey 07927 (US)
(74) Representative: Setna, Rohan P.

(57) **Abstract**

Substantially uniform hydration and dispersion of high amounts of protein and fiber are achieved while avoiding lump formation, hard textures, and off-tastes in the continuous, mass production of high protein and high fiber content sheetable doughs, and baked goods such as crackers, snacks, and cookies made from the sheeted doughs, by hydrating the protein and fiber with water at a temperature below the denaturization temperature of the proteins, and steaming the hydrated mixture without substantial gelatinization of starch during dough production. The steamed, hydrated mass may be admixed with ingredients comprising at least one flour comprising starch to obtain a dough while avoiding substantial gelatinization of starch of the at least one flour during mixing. The baked goods may have a protein content of at least about 4g, a fiber content of at least about 4g, and a whole grain flour content of at least about 4g per 30g serving.

## Description

### FIELD OF THE INVENTION

This invention relates to the production of high fiber and high protein baked goods, such as crackers and snacks.

### BACKGROUND OF THE INVENTION

High fiber and high protein baked goods, such as crackers and snacks, offer potential health and weight benefits such as satiety, weight management, blunted glucose response (GR) and/or reduced glycemic index (GI) which would make them a better choice for individuals who try to manage their weight and for diabetics. Also, a recent study suggests that older adults who eat diets rich in citrus fruits, leafy greens and fish oil, but low in "glycemic index," may have a lower risk of Age-related Macular Degeneration (AMD), the leading cause of vision loss among older U.S. adults. Glycemic index (GI) refers to how rapidly a food causes blood sugar to rise. High-GI foods, like white bread and potatoes, tend to spur a quick elevation in blood sugar, while low-GI foods, such as lentils, soybeans, yogurt and many high-fiber grains, create a more gradual increase in blood sugar. The blood-sugar surges associated with high-GI diets may eventually damage the macula, because excess blood sugar interacts with other molecules, like fats and proteins, to form what are called glycated molecules. This process, in turn, can put the body under more oxidative stress, which over time damages cells and may lead to various diseases, including AMD.

However, in the continuous production of crackers it has been found that increasing the protein content and fiber content to levels such as at least 4g of fiber per 30 gram serving (20% daily value, DV) and at least 4g of protein per 30 gram serving (10% DV) results in dough machining problems, and a hard texture and off-flavors in the baked product. To obtain good dispersibility of the protein and the fiber in the dough, they must be hydrated. However, when mixing protein, fiber and flour together and then adding water, these ingredients compete for the water. It has been found that when large amounts of protein and fiber are employed, incomplete hydration occurs along with lumping of the protein and lumping of the fiber. The texture of the baked product becomes hard and off-flavors tend to occur, it is believed, due to incomplete hydration of the protein and the fiber. Adding more water and more intense mixing during dough production to increase hydration requires prolonged baked times and/or higher baking temperatures to remove the extra water. The more intense mixing does not sufficiently alleviate the protein and fiber dispersibility problem and lump formation. Also, the prolonged baking and higher baking temperatures results in a hard texture, and off-flavor and off-colors due to excessive baking or burning, and excessive production of Maillard reaction products by interaction of proteins and reducing sugars during baking.

Steaming may be employed to hydrate the protein and fiber, using lower amounts of added water or moisture. However, it has been found that when a mixture of protein and fiber is steamed, excessive lumping tends to occur due to the formation of a hard, hydrated surface layer which does not permit substantial penetration of water or moisture into the interior of the lumps. The hard layer, it is believed, may be due to excessive protein denaturization caused by the high temperature of steam. Also, increasing mixing times or mixing intensity does not sufficiently eliminate the lumping problem. The presence of lumps in the dough makes dough sheeting difficult and the presence of lumps in the sheeted dough causes tearing of the dough during transport on conveyor belts, and during machining operations such as dough sheet thickness size reduction, and cutting.

Furthermore, it has been found that steaming of the protein and fiber in the presence of the flour component results in excessive gelatinization of starch prior to baking. Excessive gelatinization of the starch prior to baking causes lump formation in the dough, and a harder texture in the baked product. Additionally, as the degree of starch gelatinization prior to baking increases, the glycemic index (GI) of the baked product tends to increase.

U.S. Patent No. 7,252,850 to Levin et al and U.S. Patent Publication No. 2006/0141126 to Levin et al disclose that grain products such as bread can be enriched in protein and/or fiber by the addition of complex compositions comprising protein and/or fiber to flours or dough. When dough is formed incorporating the additive compositions hydration of the added protein or fiber is controlled in a manner so as to provide dough having desirable characteristics and breads products produced from such dough that have a texture and crumb structure comparable to breads that do not have added amounts of gluten and/or fiber. The protein additives comprise protein, hydrocolloids, and oil and optionally may contain minerals and emulsifiers. Preferred additives according to this invention comprise vital wheat gluten, guar gum, xanthan gum, calcium carbonate, lecithin and canola oil. These additives are processed according to the invention to form a high density complex composition having a vital gluten content of about 85% by weight. The fiber additives comprise protein, hydrocolloids, and oil and optionally may contain minerals and emulsifiers. Preferred additives comprise dietary fiber, guar gum, xanthan gum, calcium carbonate, lecithin and canola oil. These additives are processed according to the invention to form a high density complex composition having a dietary fiber content of about 85% by weight. The process for making the protein and fiber additives comprises the steps of mixing the protein and/or fiber, hydrocolloids, minerals, lecithin, oil and water in a mixer capable of creating high shear followed by drying in a convection oven. Bread products are provided which are enriched in protein and/or fiber by the addition of the additives to the baking flour or dough. Any amount of the additives may be added to bread flour depending on the desired protein and/or fiber composition of the final bread product. The additives are employed in a typical bread formulation in an amount ranging from about 0 to about 200% by flour weight. Bread products made according to the invention have protein and/or fiber contents from about 5% to about 50% by weight. Bread products according to the invention include, but are not limited to, white bread, wheat bread, tortillas, rolls and buns, specialty/artisan breads, rye bread, whole grain varietals, bagels, pasta, grain-based snack foods, cereals, crackers, cookies, cakes, muffins, pastries, pancakes, pizza crusts, doughnuts, grain-based nutritional supplements, and salty snacks such as pretzels, tortilla chips, corn chips, and potato chips.

According to Levin et al, it is believed that the water absorbed by the gums slowly penetrates the dense protein and/or fiber "core," initiating hydration at a markedly reduced rate as compared to "free" protein or fiber dispersed within the dough. In the case of the protein additives the controlled hydration achieved by the complex compositions is believed to result in diminished or delayed gluten knitting. The incorporation of the additives into bread dough produces dough with visco-elastic qualities substantially similar to dough that does not have added gluten.

U.S. Patent No. 7,235,276 to Allen et al discloses ready-to-eat puffed dried food products that are high both in protein and in fiber. The cereals contain sufficient amounts of at least one protein ingredient to provide a total protein content about 50% to 75% (dry weight) of the cooked food product; sufficient amounts of at least one dietary fiber ingredient to provide a total fiber content of about 1-45% (dry weight); and sufficient amounts of a starch containing ingredient to provide a starch content of about 5-45%. The products have a low glycemic index (i.e., less than 100, with white bread being 100), the speed at which different foods affect blood glucose levels.

The puffed high protein fiber containing food products of Allen et al are prepared by forming a hydrated, hot, worked, expandable food dough or plastic mass in an extruder, directly expanding the mass upon extrusion; forming the expanded mass into puffed pieces; and, drying the puffed pieces so formed to obtain the high protein and fiber content in the puffed finished food products. In practicing the first step of forming the hot expandable food mass, a cooked food dough can be prepared by blending various dry ingredients together with water and cooking to gelatinize the starchy components and to develop a cooked flavor. The cooked material can also be mechanically worked to form a cooked cereal dough.

U.S. Patent No. 7,220,442 to Gautam et al discloses a nutrition bar which incorporates protein in the form of nuggets having high levels of selected proteins. By use of the nuggets, nutrition bars are formulated to have elevated levels of protein, yet good taste and other organoleptic properties. The nuggets include greater than 50 wt % of a non-soy protein selected from the group consisting of milk protein, rice protein and pea protein. The milk protein is preferably whey protein. The nuggets are preferably made using an extrusion process wherein the extrusion temperature is moderated so as to avoid damage to the whey proteins and concomitant off-taste. The extrusion is conducted at temperatures of from 60 to 140°C, after which the protein is dried using a belt/conveyor drier or a fluid bed drier. In an alternate method of making the nuggets, a lower extrusion temperature of up to 90°C. is used and one or more supercritical fluids are injected prior to extrusion to form a puffed product. Among fiber sources which may be included in the compositions of the invention are fructose oligosaccharides such as inulin, guar gum, gum arabic, gum acacia, oat fiber, cellulose and mixtures thereof. The compositions preferably contain at least 2 grams of fiber per 56 g serving, especially at least 5 grams of fiber per serving. In addition to the nuggets, other dry components include grains, flours, maltodextrin and milk powders.

U.S. Patent No. 7,153,528 to Malleshi et al discloses a process for the preparation of a hypoglycemic food and/or formulation thereof of high textual and sensory quality, useful as a snack or as a wholesome or supplementary food, especially to Type II diabetics. The process includes the steps of: a) spraying about 2-6% (volume/weight) water onto cereal, b) tempering or resting the sprayed cereal for a time duration ranging between 5-15 min, c) scouring or decorticating the tempered or rested cereal to about 2-4% degree of decortication, d) toasting the decorticated cereal optionally along with legumes, soy dhal, spice and condiments individually by contact heat at about 60 to 80°C for a time duration ranging between 10-30 min to obtain a cereal with golden brown color, e) mixing the toasted cereal with one or more ingredients selected from the group consisting of legumes, soy dhal, spices, condiments, and fenugreek seeds to obtain a hypoglycemic blend, f) combining pulverized, dried Garcinia combogia rinds and the hypoglycemic blend into grits of about 350 microns or less particle size to obtain a pulverized mixture, g) blending the pulverized mixture with skimmed milk powder, vegetable oil, and amla powder to obtain a blended product, h) fortifying the blended product with a vitamin and mineral premix to obtain a fortified product, and i) homogenizing the fortified product with a conventional food material to obtain the hypoglycemic food and/or formulation thereof.

U.S. Patent No. 4,961,937 to Rudel discloses a composition of natural ingredients which consists of a milled oat groat product and high gluten wheat flour. The composition may also contain one or more diluents of other natural grain products. The use of the composition in the manufacture of both yeast and chemically leavened baked goods results in products which do not stale and have extended keeping qualities, are nutritionally superior due to high protein and dietary fiber content and are reduced in calories.

U.S. Patent No. 4,315,954 to Kuipers et al discloses a dietary snack product rich in fiber produced by a process wherein a fiber containing substance which is difficult to extrude by itself is mixed with a protein such as milk protein plastifiable under extruding conditions, with the addition of water if desired, to form a mixture having a moisture content between 8 and 25%, and the obtained mixture is extruded at a temperature of at least 100°C. The resulting dietary product may contain 10 to 80% rich in fiber such as bran and 20 to 90% of plastifiable protein.

U.S. Patent Publication No. 2009/0004356 to Bunke et al discloses a snack chip comprising from about 40% to about 60% of nut based material; from about 40% to about 60% of starch material made from materials selected from the group consisting of tapioca, rice, and mixtures thereof; from about 0.1 % to about 5.0% water; and from about 0% to about 20% of optional ingredients. At least about 40% of the starch material can be pre-gelatinized. The snack chip can be made by combining the nut based material and dry ingredients with water to form a dough, which is then sheeted, cut into individual pieces, and baked to form the snack chip. Alternatively, the cut pieces can be dried to form a half-product and then cooked to form the snack chip. The dry blend can comprise the nut based materials, the starch materials, and optional dry ingredients. Preferred dry blends comprise from about 30% to about 60%, by weight of the dry ingredients, nut based materials; from about 40% to about 60%, by weight of the dry ingredients, starch material; and from 0% to about 30%, by weight of the dry ingredients, optional ingredients. Furthermore, the balance of the dry blend can comprise one or more other components including but not limited to, protein sources, fiber, minerals, vitamins, colorants, flavors, fruits pieces, vegetables, seeds, herbs, spices, and mixtures thereof.

U.S. Patent Publication No. 2008/0003340 to Karwowski et al discloses the production of shelf-stable whole grain-containing composite food products, such as savory and sweet snacks and cereals. The products are continuously produced by cooking whole grain cereal grain particles in the presence of water effective to gelatinize starch content of the whole grain cereal particles to provide gelatinized whole grain cereal grain particles, and mixing the gelatinized whole grain cereal grain particles with starch, whole grain flour, optional minor dough ingredients such as leavening agent, and a food component selected from the group consisting of vegetables and fruits, effective to prepare dough. Steam injection may be employed to gelatinize the starch. The dough is formed into discrete dough units, which are baked or fried to provide a whole-grain containing composite food product that is nutritious, low fat, multi-flavored, and a good source of dietary fiber. Also, non-fat dry milk solids. (i.e., milk powder) or soybean protein may be added in an amount sufficient to create a final protein level of from about 10 to about 20 weight percent.

U.S. Patent Publication No. 2007/0077345 to Borders et al discloses a process for producing a high-protein food product by combining soy protein and at least one additional protein to produce a first mixture, adding water to the first mixture and combining to produce a second mixture, and extruding the second mixture, thus producing a high-protein food product. The extruding can include subjecting the second mixture to heat and pressure. The process may also include drying the high-protein food product. The extruding can include, for example, melting and/or plasticization of the ingredients, gelatinization of starch and denaturation of proteins. The soy protein can be about 70% to about 74% of the weight of the dry mixture, the additional protein can be wheat gluten and be about 23% to about 27% of the weight of the dry mixture, and the dry mixture can include calcium carbonate as about 0.10% to about 6% of the dry weight of the dry mixture. The high-protein food product and extruded product can be a chip, crisp, cracker, cereal piece, cookie piece, or a snack food. The high-protein food product can be an extruded dough, protein flakes, or protein nuggets. The additional protein can be milk protein, caseinate, whey protein, buttermilk solids, milk powders, egg protein, canola protein, pea protein, wheat protein, wheat gluten, potato protein, corn protein, sesame protein, sunflower protein, cottonseed protein, copra protein, palm kernel protein, safflower protein, linseed protein, peanut protein, lupin protein, edible bean, oat protein, and other legume, cereal proteins, or mixtures of any thereof. The high-protein extruded product may have a carbohydrate content of less than about 5% on an "as-is" basis. The carbohydrate may comprise, without limitation, a starch or a fiber. The fiber may be insoluble fiber, soluble fiber (e.g., Fibersol.RTM.), and combinations of such ingredients.

U.S. Patent Publication No. 2006/0292287 and International Patent Publication No. WO2005036982 to Onwulata discloses a dietary composition produced by a process involving extruding a protein containing product, such as whey protein isolate, and water through an extruder at about 50 to about 450 rpm and at a temperature of about 40°C to about 120°C, wherein the residence time of the protein containing product in the extruder is about 15- to about 90 seconds). The dietary composition contains partially denatured protein containing product or totally denatured protein containing product or mixtures thereof. The food product contains at least one food ingredient and a dietary fiber composition.

U.S. Patent Publication No. 2006/0210687 to Lundberg et al discloses a highly refined cellulose material as an ingredient in the preparation of a non-leavened or leavened crusted product that is prepared by baking, frying, broiling, or other heated-prepared flour or grain based food products such as chips, crackers. The precooked mass includes 0.25%-5.0% by weight of highly refined cellulose fiber, 2-20% by weight animal consumable oils or fats, 30-92.75% of flour or grain and 5-45% by weight of water. The final product has increased crust strength and resistance to cracking and rigid crumbling. The product may include animal-derived proteins including, milk proteins that are isolated or derived from bovine milk; muscle tissue proteins that are isolated or derived from mammals, reptiles or amphibians; connective tissue proteins, egg proteins isolated or derived from eggs or components of eggs; and mixtures thereof. Examples of useful milk proteins include caseins, such as sodium caseinate and calcium caseinate; and whey proteins, such as beta-lactoglobulin and alpha-lactalbumin. These milk proteins may be derived from whole milk, skim milk, nonfat dry milk solids, whey, whey protein concentrate, whey protein isolate, caseinates, and mixtures thereof. Examples of useful connective tissue proteins include collagen, gelatin, elastin and mixtures thereof.

U.S. Patent Publication No. 2006/0134295 to Maningat et al discloses high-fiber, high-protein pasta and noodle products which exhibit comparable handling and processing properties, appearance, texture, flavor and cooking characteristics to those of traditional pasta and noodle products. The high-fiber, high-protein pasta and noodles include a resistant starch having a total dietary fiber content between about 10% and about 70%, a protein source selected from the group consisting of gliadin, glutenin, a wheat protein isolate, a wheat protein concentrate, a devitalized wheat gluten, a fractionated wheat protein product, a deamidated wheat gluten product, a hydrolyzed wheat protein product, or a mixture thereof. The pasta includes semolina and noodles include wheat flour. The procedure for making spaghetti includes: a) blending all the ingredients using a cross-flow blender, b) adding water to bring the moisture content to about 32%, c) extruding the resulting hydrated material in a DeMaCo semi-commercial laboratory extruder at an extrusion temperature of 45°C, and d) drying the spaghetti using a high-temperature (70°C) drying cycle. The noodles may be made by using a synthetic flour mixture comprising an 84:16 blend of Fibersym® 70 (resistant wheat starch) and Pasta Power® (wheat protein isolate) used to replace about 10%, 30%, 50%, or 70% of the wheat flour used in traditional recipes. The dry ingredients are combined and water is added at levels of between about 28-38 parts for every 100 parts of the wheat flour and synthetic flour mixture. Mixing, compressing, compounding, and sheeting operations are performed, and the noodle sheet is slit and cut for white salted and chuka-men noodles. In the case of instant fried noodles, the noodle sheet is slit, waved, steamed, and fried.

U.S. Patent Publication No. 2006/0003071 and International Patent Publication No. WO2006014201 each to Faa et al disclose a low carbohydrate snack product prepared from protein, fiber and corn masa. In one embodiment, a corn masa made from a traditional nixtamalization process is used. The concentrated protein ingredients can comprise soy protein isolate or soy protein concentrate. Other protein sources can be used, either in lieu of, or in combination with the soy-based proteins including, dairy-based proteins, wheat-based proteins, rice-based proteins, potato-based proteins and egg-based proteins. Moreover, other legume-based protein sources other than soy can be used including, but not limited to, beans, lentils and peas. Fiber comprises between 0% and about 20% by weight and more preferably between 5% and 15% by weight of the dry ingredients. The fiber, including oat fiber, bamboo fiber, potato fiber, corn bran, rice bran, and wheat bran can be used to reduce the amount of net carbohydrates in the resultant food product and can thus be added as ingredients without increasing carbohydrate content of the food product. Higher levels of fiber can negatively impact finished product texture and flavor. More fiber can result in increased grittiness. Fiber is used because it is not a digestible carbohydrate and fiber also helps the finished product to be more resistant to breakage.

In one embodiment, following the addition of water to the dry ingredients to make a low carbohydrate dough, the resultant dough comprises about 15% to about 59% of soy isolate or soy concentrate, about 0% to about 20% fiber by weight, about 30% to about 50% by weight corn masa, and about 30% to about 50% by weight added water. The dough is mixed in a continuous batch or other mixer. The mixing may occur at ambient temperature, generally about 60°F to about 85°F. Following mixing, the dough may be routed to a Kibbler device that breaks the dough into smaller dough pieces of less than about two inches in diameter to facilitate sheeting. The dough can then be formed into pre-forms as any other snack food dough is processed in the art. For example, the dough can be extruded or sheeted and then cut into snack food pre-forms.

U.S. Patent Publication No. 2005/0064080 to Creighton et al discloses cooked dried farinaceous food products such as cooked cereal doughs, ready-to-eat cereals and grain based snacks fabricated from such cooked cereal doughs containing high levels of both insoluble and soluble fiber as well as high levels of protein. The cereals contain about 5 to 15% (dry weight) insoluble fiber; 5% to 15% soluble fiber in an excess of insoluble fiber; 15% to 30% (dry weight) plant protein and the balance cereal ingredients especially rice and wheat flour. The soluble fiber is preferably provided at least in part by an inulin ingredient that can be incorporated into the dough and/or topically applied. A cooked cereal dough can be prepared by blending various dry cereal ingredients together with water and cooking to gelatinize the starchy components and to develop a cooked flavor. The cooked material can also be mechanically worked to form a cooked cereal dough. The cooking and mechanical work can occur simultaneously or sequentially. The dry ingredients can also include various additives such as sugar(s), salt and mineral salts, e.g., trisodium phosphate, and starches. Since inulin does not require cooking, the inulin can be added either before or after cooking. Thus, in one preferred embodiment, the FOS such as inulin can be added to the cereal and other dry ingredients prior to cooking. The inulin bearing dry blend of cereal ingredients can then be combined with water, heated to cook and gelatinize the starchy constituents and mechanically worked to form a cooked cereal dough fortified with inulin.

Likewise, all or a portion of the vegetable protein can be added to the cereal dough after cooking to facilitate or speed the cooked cereal dough preparation. An advantage to the post cooking addition of all or a portion of the protein ingredient is in the reduction in heat exposure of the protein and thereby any resultant heat damage to the flavor and texture. The methods can further comprise the step of forming the dough into individual pieces of desirable shape and size. In one variation, the dough can be sheeted to form sheets of dough (e.g., 25 to 800 microns in thickness) and the individual pieces are formed by cutting the sheet into individual pieces or by stamping out shaped pieces from the dough sheet.

International Patent Publication No. W02008119957 Al to Hackett et al discloses the use of at least 3g of protein in the manufacture of a snack food comprising from 150 to 300 kcal for use in weight maintenance in a human. The protein-containing snack food, it is disclosed, increases satiety which leads to a reduction in the calorie intake at the next meal, resulting in maintenance of weight. Preferably the calorie intake at the meal is reduced proportionally to the amount of protein present in the snack food. Preferably, the amount of protein in the snack food is from 3 to 40g, more preferably from 7 to 30g, or 10 to 25g, for example, 20g. The amount of protein is most preferably about 4g, and up to 15g. Preferably, the protein is whey protein, peanut protein or soy protein and most preferably the protein is one or more of whey protein or peanut protein. The snack food may further comprise fiber, such as pectins, gums, cellulose and hemi-cellulose. Preferably, the fiber is soluble fiber, such as pectins and gums. The fiber is preferably polydextrose. It is further disclosed that the addition of fiber to the snack food further increases the satiating effect resulting in a further reduction of calorie intake at the subsequent meal. Preferably the amount of fiber in the snack food is from 5g to 25g, more preferably, from 8g to 20g, most preferably 10g to 15g, for example, 12g. The composition may be liquid, a semi-solid or solid. For example, the snack food may be a snack drink such as a milkshake-type composition. When in a semi-solid format it may be in the form of a mousse or a yoghurt-type snack. When in a solid format it may be in the form of a snack bar, such as a cereal bar, or a nut based bar.

The present invention provides a process for the mass production of high protein and high fiber sheetable doughs, and crackers, snacks, and other baked goods made from the doughs. The method achieves at least substantially uniform hydration of the protein and fiber, at least substantially uniform dispersement of the hydrated protein and hydrated fiber in the dough, and avoids lumping of the protein and fiber which causes dough sheet formation problems, and dough sheet ripping during transport. Baked goods may be produced in accordance with the method of the present invention having at least 4g of fiber, preferably at least 5 g of fiber, per 30 gram serving (at least 16%, preferably at least 20% daily value, DV), and at least 4g of protein, preferably at least 5g of protein, per 30 gram serving (at least 8% DV, preferably at least 10% DV). The high protein and high fiber contents are achieved without dough machining problems, without formation of a hard texture and off-flavors and off-colors in the baked product caused by protein denaturization, prolonged baking or excessive production of Maillard reaction products. The process of the present invention also avoids substantial starch gelatinization prior to baking which also helps to avoid lump formation in the dough and a hard texture in the baked product, while providing a lower glycemic index (GI) in the baked product. Baked products, such as crackers, sweet or savory snacks, and cookies produced in accordance with the present invention may have a crisp, not hard texture, and soft products such as cakes, muffins, breadsticks, and soft cookies may have a soft, non-rubbery texture. The baked products or goods produced in accordance with the present invention exhibit a pleasant taste with no off-flavors, good color, and provide potential health and weight benefits such as satiety, weight management, blunted glucose response (GR) and/or reduced glycemic index (GI) which would make them a better choice for individuals who try to manage their weight, and for diabetics, and for seniors to possibly provide protection against or reduce the risk of age-related macular degeneration (AMD). In embodiments of the invention, the method may be employed to produce baked goods such as crackers, cookies, and snacks with a high protein content and high fiber content, and a reduced or low calorie content.

### SUMMARY OF THE INVENTION

Substantially uniform hydration and dispersion of high amounts of protein and fiber are achieved while avoiding lump formation in the continuous, batch-continuous, or batch-wise mass production of high protein and high fiber content sheetable doughs, and baked goods such as crackers, snacks, and cookies made from the sheeted doughs**,** by hydrating the protein and fiber with water at a temperature below the denaturization temperature of the proteins, and steaming the hydrated mixture without substantial gelatinization of starch.

In embodiments of the invention, a high protein, high fiber dough may be produced by admixing a protein component, a fiber component, and water at a temperature below the protein denaturization temperature of the protein component, such as less than about 120°F, preferably from about 75°F to about 90°F, to at least substantially uniformly hydrate the protein component and the fiber component and obtain a substantially homogeneous hydrated mass of the protein component and the fiber component. The hydrated mass may be steamed to a temperature above the denaturization temperature of the protein component. The steaming adds less than about 5% by weight of water, preferably from about 1% by weight to about 4% by weight of water, based upon the weight of the dough. The steamed, hydrated mass may be admixed with ingredients comprising at least one flour comprising starch to obtain a dough while avoiding substantial gelatinization of starch of the at least one flour. The steaming may be conducted to raise the temperature of the hydrated mass of the protein component and the fiber component to about 160°F to about 200°F, preferably from 170°F to about 190°F, which helps to provide a softer, non-hard texture in the baked goods. Steaming softens the fiber, making it less abrasive, and makes the protein less mealy or powdery, and improves the sensory characteristics such as taste and mouthfeel of the baked goods.

Avoidance of substantial starch gelatinization prior to baking helps to eliminate lump formation in the dough and a hard texture in the baked product, while providing a lower glycemic index (GI) in the baked product. Starch gelatinization may be avoided by: a) adding the flour ingredient after the protein and fiber hydration and steaming steps, so that the starch is not subjected to gelatinizing temperatures and easy access to water, and b) admixing of the steamed hydrated mass with the ingredients comprising at least one flour which are at a low enough temperature so that upon combining and mixing of the ingredients, the resulting dough has a dough temperature which is below the gelatinization temperature of starch. In embodiments of the invention, the admixing of the steamed hydrated mass and the ingredients comprising at least one flour may result in a dough temperature which is from about 130°F to about 170°F.

The high protein, high fiber, doughs of the present invention may be sheeted using conventional dough forming equipment such as counterrotating rolls, and laminators, and extruders. The sheetable doughs comprise at least substantially homogeneous mixture of a protein component, a fiber component, at least one flour comprising starch, and water, are bakeable to a baked good having a protein content of at least about 4g protein per 30g serving, and a fiber content of at least about 4g fiber per 30g serving, wherein the starch is protected from enzymatic digestion by entrapment in a protein -fiber matrix. In embodiments of the invention, the dough may have a protein component content of from about 8% by weight to about 22% by weight, based upon the weight of the dough, and a fiber content of from about 8% by weight to about 18% by weight, based upon the weight of the dough.

In another aspect of the invention, a high protein, high fiber baked good or product may be produced by admixing a protein component and a fiber component to obtain an at least substantially homogeneous preblended particulate mixture, admixing the preblended particulate mixture with water at a temperature below the protein denaturization temperature of the protein component to at least substantially uniformly hydrate the protein component and the fiber component and obtain a substantially homogeneous hydrated mass of the protein component and the fiber component, steaming the hydrated mass to a temperature above the denaturization temperature of the protein component, admixing the steamed, hydrated mass with ingredients comprising at least one flour comprising starch to obtain a dough while avoiding substantial gelatinization of starch of the at least one flour, sheeting the dough, optionally laminating the dough, forming the dough into pieces, and baking the pieces to obtain a baked good having a protein content of at least about 4g protein per 30g serving, and a fiber content of at least about 4g fiber per 30g serving.

In embodiments of the invention the at least one flour may comprise graham flour, wheat flour, whole grain flour, and mixtures thereof. In preferred embodiments, the at least one flour comprises whole grain flour in an amount of at least about 4g per 30g serving. In preferred embodiments of the invention, the baked good or product may have a protein content of from about 5g to about 10g per 30g serving, a fiber content of from about 5g to about 8g per 30g serving, and a whole grain flour content of from about 5g to about 10g per 30g serving. The calorie content of the baked goods is preferably from about 90 kcal to about 140 kcal per 30g serving.

Baked goods which may be produced in accordance with the present invention include crackers, cookies, croissants, muffins, cakes, cupcakes, breadsticks, sweet snacks, and savory snacks. The baked products or goods produced in accordance with the present invention exhibit a pleasant taste with no off-flavors, good color, and provide potential health and weight benefits such as satiety, weight management, blunted glucose response (GR) and/or reduced glycemic index (GI).

### DETAILED DESCRIPTION OF THE INVENTION

The present invention provides a process for the continuous, batch-continuous, or batch-wise mass production of high protein, high fiber baked goods without formation of lumps of protein and fiber which interfere with dough formation such as dough sheet production and transport. Also, at least substantially uniform hydration of protein and fiber and substantially uniform dispersion of protein and fiber throughout the dough is achieved without substantial denaturization of protein prior to baking or the production of a hard texture or off-flavors and off-colors in the baked product caused by protein denaturization, prolonged baking or excessive production of Maillard reaction products. The process of the present invention also avoids substantial starch gelatinization prior to baking which also helps to avoid lump formation in the dough and a hard texture in the baked product, while providing a lower glycemic index (GI) in the baked product.

Lumping problems and a hard texture, off-flavors and off-odors are eliminated, and a sheetable dough which does not tear or rip during production and conveying, which is bakeable to a crisp, not hard texture, or bakeable to a soft, non-rubbery texture is achieved by admixing a protein component, a fiber component, and water at a temperature below the protein denaturization temperature of the protein component to at least substantially uniformly hydrate the protein component and the fiber component. The substantially homogeneous hydrated mass of the protein component and the fiber component is steamed to a temperature above the denaturization temperature of the protein component. The steamed, hydrated mass is mixed with ingredients comprising at least one flour comprising starch to obtain a dough while avoiding substantial gelatinization of starch of the at least one flour.

Generally, starch gelatinization occurs when: a) water in a sufficient amount, generally at least about 30% by weight, based upon the weight of the starch, is added to and mixed with starch and, b) the temperature of the starch is raised to at least about 80°C (176°F), preferably 100°C (212°F) or more. The gelatinization temperature depends upon the amount of water available for interaction with the starch. The lower the amount of available water, generally, the higher the gelatinization temperature. Gelatinization may be defined as the collapse (disruption) of molecular orders within the starch granule, manifested in irreversible changes in properties such as granular swelling, native crystallite melting, loss of birefringence, and starch solubilization. The temperature of the initial stage of gelatinization and the temperature range over which it occurs are governed by starch concentration, method of observation, granule type, and heterogeneities within the granule population under observation. Pasting is the second-stage phenomenon following gelatinization in the dissolution of starch. It involves increased granular swelling, exudation of molecular components (i.e. amylose, followed by amylopectin) from the granule, and eventually, total disruption of the granules. See Atwell et al., "The Terminology And Methodology Associated With Basic Starch Phenomena," Cereal Foods World, Vol. 33, No. 3, pgs. 306-311 (March 1988). In embodiments of the present invention, the starch of the at least one flour contained in the dough prior to baking may have a low degree of starch gelatinization of less than about 30%, preferably less than about 20%, most preferably less than about 10%, or may be completely ungelatinized as measured by differential scanning calorimetry (DSC).

Baked goods baked from the high protein content, high fiber content sheetable doughs obtained in accordance with the methods of the present invention may have a protein content of at least about 4g protein per 30g serving, preferably from about 5g to about 10g per 30g serving, and a fiber content of at least about 4g fiber per 30g serving, preferably from about 5g to about 10g per 30g serving, wherein the starch is protected from enzymatic digestion by entrapment in a protein -fiber matrix. In embodiments of the invention, the baked goods may additionally have a whole grain flour content of at least about 4g per 30g serving, preferably from about 5g to about 10g per 30g serving. Although in embodiments of the invention the baked goods may be produced with higher calorie contents, such as more than about 140 kcal or more per 30g serving, they preferably contain low calorie contents of from about 90 kcal to about 140 kcal per 30g serving, more preferably from about 100 kcal per 30g serving to about 125 kcal per 30g serving. The baked products or goods produced in accordance with the present invention provide potential health and weight benefits such as satiety, weight management, blunted glucose response (GR) and/or reduced glycemic index (GI), and exhibit a pleasant taste with no off-flavors, and good color, and texture.

The protein component or protein ingredient or protein source which may be employed in the present invention may include an animal protein, plant or vegetable protein, dairy protein, fish protein and mixtures thereof. Exemplary of protein components which may be employed include animal-derived proteins including, milk proteins that are isolated or derived from bovine milk; muscle tissue proteins that are isolated or derived from mammals, reptiles or amphibians; connective tissue proteins, egg proteins isolated or derived from eggs or components of eggs; and mixtures thereof. Examples of useful milk proteins include caseins, such as sodium caseinate and calcium caseinate; and whey proteins, such as beta-lactoglobulin and alpha-lactalbumin, milk protein hydrolyzates, buttermilk solids, and milk powders, and mixtures thereof. The milk proteins may be derived from whole milk, skim milk, nonfat dry milk solids, whey, whey protein concentrate, whey protein isolate, caseinates, and mixtures thereof. Examples of useful connective tissue proteins include collagen, gelatin, elastin and mixtures thereof. Exemplary of plant or vegetable proteins which may be used include soy protein, such as the concentrated protein ingredients soy protein isolate or soy protein concentrate, canola protein, wheat protein, wheat gluten, potato protein, corn protein, sesame protein, sunflower protein, cottonseed protein, copra protein, palm kernel protein, safflower protein, rice-based proteins, potato-based proteins, linseed protein, peanut protein, lupin protein, edible bean protein or bean powder, such as Pinto bean flour, Navy bean protein, and black bean protein, oat protein, lentil protein, pea protein, such as pea protein flour, and other legumes, nut protein, such as pecan, almond, hazelnut walnut, and other tree nut proteins, or ground nuts or finely comminuted nuts, cereal proteins, such as gliadin, glutenin, a wheat protein isolate, a wheat protein concentrate, a devitalized wheat gluten, a fractionated wheat protein product, a deamidated wheat gluten product, a hydrolyzed wheat protein product, vital wheat gluten, and mixtures thereof. Preferred protein components or ingredients or protein sources for use in the present invention are milk protein hydrolyzate, soy protein isolate, pea protein flour, wheat protein isolate, whey protein. Pinto bean flour, and mixtures thereof.

The fiber component or fiber ingredient or fiber source which may be employed in the present invention may include a soluble fiber, insoluble fiber or mixtures thereof. Exemplary of fiber components which may be employed are resistant starches, fructose oligosaccharides such as inulin, oligosaccharides such as DP2 and DP3 or higher degree of polymerization (DP) oligosaccharides, pectins, gums such as guar gum, alginate gums, xanthan gum, gum arabic, and gum acacia, beta-glucans, vegetable and legume fibers such as soy fiber, pea fiber, and oat fiber, bran, such as corn bran, wheat bran, oat bran, barley bran, soy bran, and rice bran, cellulosic materials such as cellulose, hemicellulose, and hydroxymethylcellulose, soluble or insoluble polydextroses, , resistant maltodextrins, such as Fibersol®-2, and mixtures thereof. Fibersol®-2 is manufactured by Matsutani America, Incorporated, Decatur, Illinois. It is a soluble dietary fiber (90% min. dsb) produced from corn starch by pyrolysis and subsequent enzymatic treatment to purposefully convert a portion of the normal alpha - -1,4 glucose linkages to random 1,2-, 1,3-, and 1,4- alpha or beta linkages. Preferred fiber components for use in the present invention include resistant starches, oat fiber, inulin, corn bran, wheat bran, oat bran, rice bran, polydextrose, hydroxymethylcellulose, resistant maltodextrins, and guar gum.

The method used for the determination of the fiber content may be the Prosky method for Total Dietary Fiber in Foods set forth in AOAC, J. Assoc. Anal. Chem., 68(2) p. 399 (1985) and AOAC. Official Methods of Analysis, J. Assoc. Anal. Chem. 15th ed., pp. 1105-1106 (1990). The AOAC method for Total Dietary Fiber in Foods involves: a) treatment with 0.1 ml α-amylase, Sigma Chemical Co., followed by b) treatment with 5 mg protease, Sigma Chemical Co., then treatment with 0.3 ml amyloglucosidase, Sigma Chemical Co., d) precipitation of soluble fiber by ethanol, and e) filtering and drying. Another, more stringent method for determining dietary fiber content which may also be used is disclosed in Example 1B of U.S. Patent No. 6,013,299 to Haynes et al, the disclosure of which is herein incorporated by reference in its entirety. The Haynes et al method is adopted and modified from the Prosky method for Total Dietary Fiber in Foods set forth in AOAC. The Haynes et al adopted method is more stringent, involving higher amounts of enzymes and freeze drying, and results in lower values for the yield of resistant starch. For inulin, the dietary fiber content may be determined using AOAC 997.08 or AOAC 999.03.

Inulin which may be employed in the present invention is a well known β-2-fructouranose material long used as a food supplement and a staple of commerce. It is a carbohydrate material derived from a variety of crops importantly from Jerusalem artichoke and chicory. Inulin is a prebiotic, that is, a food material that is metabolized in the intestine by desirable bacteria such as *bifidus* and *lactobacillus.*

Generally, inulin is the clean, dried fibrous material which is separated by extraction from, for example, chicory, onions and Jerusalem artichokes and other common plant sources. Inulin is available in various commercial grade varieties. Pure inulin is commercially available from, for example, Rhone-Poulenc in the U.S. under the trade name RAFTILINE® and from Imperial Suicker Unie, LLC in Europe. Pure inulin has an average degree of polymerization ("DP") of about 9 to 10. Raftiline, available in powder form, is obtained from chicory roots and is a mixture of GFₙ. molecules where: G = glucose, F = fructose, and n = number of fructose units linked and ranges from about two to more than 50.

Another commercial source of inulin which may be employed in the present invention is Beneo® inulin, manufactured by Orafti Group, Belgium. Beneo® inulin is a white, odorless, soluble powder with a slightly sweet taste and no aftertaste. It is a mixture of oligo- and polysaccharides which are composed of fructose units connected by beta (2-1) links. Almost every molecule is terminated by a glucose unit. The total number of fructose or glucose units (Degree of Polymerization or DP) of chicory inulin ranges mainly between 2 and 60.

Less preferred for use herein are less pure inulin source materials such as dried Jerusalem artichoke flour, deflavored onion flour and mixtures thereof.

The resistant starch employed in the present invention may be any commercially available or known compositions comprising enzyme resistant starch (RS) type I, II, III, or IV, or mixtures thereof. Exemplary of resistant starches which may be employed are high melting RS III type starches and heat treated RS type I, II, or IV type starches disclosed in U.S. Patent No. 6,013,299 to Haynes et al, the disclosure of which is herein incorporated by reference in its entirety. Exemplary commercially available, enzyme resistant starch compositions which may be used in the present invention are Hi-Maize 240, formerly Novelose 240, which is an enzyme resistant granular starch (an RS type III ingredient), Novelose 330 which is an enzyme resistant retrograded starch (an RS type III ingredient, non-granular retrograded starch), and Hi-maize 260, formerly Novelose 260, which is a granular resistant starch, each produced by National Starch and Chemical Co., Bridgewater, NJ, and Crystalean which is a retrograded starch produced by Opta food Ingredients, Inc., Cambridge, MA. Novelose 330 may have a moisture content of about 7% by weight, a resistant starch content of about 25% by the method of Example 1B of U.S. Patent No. 6,013,299 to Haynes et al, and a dietary fiber content by the less stringent AOAC method of about 33%. Hi-maize 260 is a granular resistant starch which contains 60% total dietary fiber (TDF) as measured by AOAC Method 991.43. Hi-maize 240 is a granular resistant starch which contributes 40% Total Dietary Fiber when analyzed using the AOAC method for fiber analysis.

In preferred embodiments of the invention, a very high melting enzyme resistant starch type III, as disclosed in U.S. Patent No. 6,013,299 to Haynes et al is employed. As disclosed in Haynes et al, the high melting resistant starch which may be employed may have an endothermic melting peak of at least 140°C, preferably at least 145°C, most preferably at least about 150°C, as determined by modulated differential scanning calorimetry (MDSC). The very-high-melting, enzyme-resistant starch component is substantially unaltered by baking, that is, it remains substantially enzyme resistant and exhibits a reduced caloric value of less than about 0.5Kcalories/gram (100% by weight RS type III, having a melting point or endothermic peak temperature of at least 140°C), as determined by fiber analysis after baking. Enthalpy values for the isolated high-melting enzyme-resistant starch may range from greater than about 5 Joules/g, preferably from about 8 Joules/g to about 15 Joules/g, at a temperature of from 130°C to about 160°C. Bulking agents or flour substitutes containing the very-high-melting RS type III starch which are disclosed in U.S. Patent No. 6,013,299 to Haynes et al may also be employed in the baked goods of the present invention. A commercially available very high melting resistant starch type III in accordance with Haynes et al which may be employed in the present invention is Promito™ resistant starch, manufactured by Tate & Lyle. PROMITOR™ Resistant Starch is corn starch and has a typical analysis of approximately 60% total dietary fiber (dry solids basis) per AOAC method 991.43. The Glycemic Response is approximately 10% that of readily digestible carbohydrates such as dextrose or maltodextrin. It has a caloric content of 1.7 Kcal/g (dry solids basis), is low in water holding capacity, and because the fiber is thermally stable it will survive harsh processes such as baking. The PROMITOR™ Resistant Starch retains its low water holding property even during baking where, by comparison, other resistant starches or fibers can hold more water.

In embodiments of the invention, the dough may have a protein component content of from about 8% by weight to about 22% by weight, based upon the weight of the dough, and a fiber content of from about 8% by weight to about 18% by weight, based upon the weight of the dough. Increasing the protein component content above about 22% by weight and increasing the fiber component content above about 18% by weight, based upon the weight of the dough tends to make machining more difficult, and the texture of the baked good too hard.

The flour component or farinaceous materials or at least one flour comprising starch which may be combined with the protein component and fiber component in producing the high protein, high fiber doughs and baked goods or products of the present invention may be any comminuted cereal grain or edible seed or vegetable meal, derivatives thereof and mixtures thereof. Exemplary of the flour component or farinaceous materials which may be used are wheat flour, corn flour, corn masa flour, oat flour, barley flour, rye flour, rice flour, potato flour, grain sorghum flour, tapioca flour, graham flour, whole grain flour, such as whole wheat flour, whole corn flour, whole barley flour, whole oat flour, and multi-whole grain flours, or starches, such as corn starch, wheat starch, rice starch, potato starch, tapioca starch, physically and/or chemically modified flours or starches, such as pregelatinized starches, and mixtures thereof. The flour may be bleached or unbleached. Wheat flour or mixtures of wheat flour with other grain flours, such as graham flour and whole grain flour, such as whole wheat flour, or multi-whole grain flours are preferred.

The total amount of the flour component, such as wheat flour, used in the compositions of the present invention may range, for example, from about 15% by weight to about 75% by weight, preferably from about 25% by weight to about 50% by weight, based upon the weight of the dough. Unless otherwise indicated, all weight percentages are based upon the total weight of all ingredients forming the doughs or formulations of the present invention, except for inclusions such as flavor chips, nuts, raisins, and the like. Thus, "the weight of the dough" does not include the weight of inclusions.

The flour component may be replaced in part by conventional flour substitutes or bulking agents, such as polydextrose, hollocellulose, hemi-cellulose, microcrystalline cellulose, and resistant starch, corn bran, wheat bran, oat bran, and rice bran, and mixtures thereof, and the like in amounts which do not adversely affect machinability, texture, flavor, and color.

Process-compatible ingredients, which can be used to modify the texture of the products produced in the present invention, include sugars such as sucrose, fructose, lactose, dextrose, galactose, maltodextrins, corn syrup solids, hydrogenated starch hydrolyzates, protein hydrolyzates, glucose syrup, mixtures thereof, and the like. Reducing sugars, such as fructose, maltose, lactose, and dextrose, or mixtures of reducing sugars may be used to promote browning. Fructose is the preferred reducing sugar, because of its ready availability and its generally more enhanced browning and flavor-development effects. Exemplary sources of fructose include invert syrup, high fructose corn syrup, molasses, brown sugar, maple syrup, mixtures thereof, and the like.

The texturizing ingredient, such as sugar, may be admixed with the other ingredients in either solid or crystalline form, such as crystalline or granulated sucrose, granulated brown sugar, or crystalline fructose, or in liquid form, such as sucrose syrup or high fructose corn syrup. In embodiments of the invention, humectant sugars, such as high fructose corn syrup, maltose, sorbose, galactose, corn syrup, glucose syrup, invert syrup, honey, molasses, fructose, lactose, dextrose, and mixtures thereof, may be used to promote softness or chewiness in the baked product.

In addition to the humectant sugars, other humectants, or aqueous solutions of humectants which are not sugars or possess a low degree of sweetness relative to sucrose, may also be employed in the dough or batter. For example, glycerol, sugar alcohols such as mannitol, maltitol, xylitol and sorbitol, and other polyols, may be used as humectants. Additional examples of humectant polyols (i.e. polyhydric alcohols) include glycols, for example propylene glycol, and hydrogenated glucose syrups. Other humectants include sugar esters, dextrins, hydrogenated starch hydrolyzates, and other starch hydrolysis products.

In embodiments of the present invention, the total sugar solids content, or the texturizing ingredient content, of the doughs of the present invention may range from zero up to about 50% by weight, preferably from about 3% by weight to about 25% by weight, based upon the weight of the dough.

The sugar solids may be replaced in whole or in part by a conventional sugar substitute or conventional bulking agent such as polydextrose, hollocellulose, microcrystalline cellulose, resistant starch, mixtures thereof, and the like, in amounts which do not adversely affect machinability, texture, flavor, and color. For example, in embodiments of the invention, resistant starch or polydextrose may be employed a preferred sugar substitute or bulking agent for making reduced calorie baked goods of the present invention. Exemplary replacement amounts may be at least about 10% by weight, for example from about 15% by weight to about 25% by weight, of the original sugar solids content.

The moisture contents of the doughs of the present invention should be sufficient to provide the desired consistency to enable proper forming, machining, and cutting or molding of the dough. The total moisture content of the doughs of the present invention will include any water included as a separately added ingredient, as well as the moisture provided by flour (which usually contains about 12% to about 14% by weight moisture), the moisture content of the fiber component and protein component ingredients, and the moisture content of other dough additives included in the formulation, such as high fructose corn syrup, invert syrups, or other liquid humectants.

Taking into account all sources of moisture in the dough or batter, including separately added water, the total moisture content of the cookie doughs or batters of the present invention is generally less than about 60% by weight, preferably less than about 50% by weight, for example from about 32% by weight to about 45 % by weight, based upon the weight of the dough for crispy or crunchy snack and cracker doughs, and from about 10% by weight to about 25% by weight, based upon the weight of the dough for cookies.

Oleaginous compositions which may be used to obtain the doughs and baked goods of the present invention may include any known shortening or fat blends or compositions useful for baking applications, and they may include conventional food-grade emulsifiers. Vegetable oils, lard, marine oils, and mixtures thereof, which are fractionated, partially hydrogenated, and/or interesterified, are exemplary of the shortenings or fats which may be used in the present invention. Edible reduced- or low-calorie, partially digestible or non-digestible fats, fat-substitutes, or synthetic fats, such as sucrose polyesters or triacyl glycerides, which are process-compatible may also be used. Mixtures of hard and soft fats or shortenings and oils may be used to achieve a desired consistency or melting profile in the oleaginous composition. Exemplary of the edible triglycerides which can be used to obtain the oleaginous compositions for use in the present invention include naturally occurring triglycerides derived from vegetable sources such as soybean oil, palm kernel oil, palm oil, rapeseed oil, safflower oil, sesame oil, sunflower seed oil, and mixtures thereof. Marine and animal oils such as sardine oil, menhaden oil, babassu oil, lard, and tallow may also be used. Synthetic triglycerides, as well as natural triglycerides of fatty acids, may also be used to obtain the oleaginous composition. The fatty acids may have a chain length of from 8 to 24 carbon atoms. Solid or semi-solid shortenings or fats at room temperatures of, for example, from about 75°F to about 110°F may be used.

The shortening or fat content of the baked goods may be less than about 15% by weight, based upon the weight of the baked good. Baked goods which may be produced in accordance with the present invention include reduced calorie baked goods which are also reduced fat, low fat or no-fat products. As used herein, a reduced-fat food product is a product having its fat content reduced by at least 25% by weight from the standard or conventional product. A low-fat product has a fat content of less than or equal to three grams of fat per reference amount or label serving. However, for small reference amounts (that is, reference amounts of 30 grams or less or two tablespoons or less), a low-fat product has a fat content of less than or equal to 3 grams per 50 grams of product. A no-fat or zero-fat product has a fat content of less than 0.5 grams of fat per reference amount and per label serving. For accompaniment crackers, such as a saltine cracker, the reference amount is 15 grams. For crackers used as snacks and for cookies, the reference amount is 30 grams. Thus, the fat content of a low-fat cracker or cookie would therefore be less than or equal to 3 grams of fat per 50 grams or less than or equal to about 6% fat, based upon the total weight of the final product. A no-fat accompaniment cracker would have a fat content of less than 0.5 grams per 15 grams or less than about 3.33%, based upon the weight of the final product.

In addition to the foregoing, the doughs of the invention may include other additives conventionally employed in crackers, snacks, and cookies. Such additives may include, for example, milk by-products, egg or egg by-products, cocoa, vanilla or other flavorings, wheat germ, defatted wheat germ, as well as inclusions such as nuts, raisins, coconut, flavored chips such as chocolate chips, butterscotch chips and caramel chips, and the like in conventional amounts.

The dough compositions of the present invention may contain up to about 5% by weight of a leavening system, based upon the weight of the dough. Exemplary of chemical leavening agents or pH-adjusting agents which may be used include alkaline materials and acidic materials such as sodium bicarbonate, ammonium bicarbonate, calcium acid phosphate, sodium acid pyrophosphate, monocalcium phosphate, diammonium phosphate, tartaric acid, mixtures thereof, and the like. Yeast may be used alone or in combination with chemical leavening agents.

The doughs of the present invention may include antimycotics or preservatives, such as calcium propionate, potassium sorbate, sorbic acid, and the like. Exemplary amounts may range up to about 1% by weight of the dough, to assure microbial shelf-stability.

Emulsifiers may be included in effective, emulsifying amounts in the doughs of the present invention. Exemplary emulsifiers which may be used include, mono- and di-glycerides, diacetyl tartaric acid ester of mono- and diglycerides, polyoxyethylene sorbitan fatty acid esters, lecithin, stearoyl lactylates, and mixtures thereof. Exemplary of the polyoxyethylene sorbitan fatty acid esters which may be used are water-soluble polysorbates such as polyoxyethylene (20) sorbitan monostearate (polysorbate 60), polyoxyethylene (20) sorbitan monooleate (polysorbate 80), and mixtures thereof. Examples of natural lecithins which may be used include those derived from plants such as soybean, rapeseed, sunflower, or corn, and those derived from animal sources such as egg yolk. Soybean-oil-derived lecithins are preferred. Exemplary of the stearoyl lactylates are alkali and alkaline-earth stearoyl lactylates such as sodium stearoyl lactylate, calcium stearoyl lactylate, and mixtures thereof. Exemplary amounts of the emulsifier which may be used range up to about 3% by weight of the dough.

In embodiments of the present invention, enzymatic treatment may be used to alter the water-holding, non-cellulosic, cell-wall polysaccharides such as pentosans and/or beta-glucans in the dough environment. Pentosans, for example, hold a lot of water, even though they amount to only a minor fraction of the dough. Hydrolyzing the pentosans, or other hemicelluloses, so they permit release of water from the dough before the starch gelatinization temperature is reached during baking, helps to lower the extent of gelatinization of starch. In embodiments of the invention, pentosanace enzymes, or enzyme preparations containing endo-cellulase, beta-glucanase, pentosanase, and beta-glucosidase. may be used in amounts and at temperatures and pH conditions normally recommended by their manufacturers, or at conditions which are optimal for pentosanase or other hemicellulase activities. Other enzymes conventionally used in cracker production, such as amylases and proteases, may be used in conventional amounts in embodiments of the present invention.

Conventional snack-flavoring, -seasoning, and -coloring ingredients, odorants, condiments, confections, and mixtures thereof may be blended into the dough composition or sprinkled upon the dough composition before baking or applied to the product after baking in conventional amounts. Exemplary of such ingredients which may be used include flavorings such as barbecue, sour cream, chives, onion, garlic, butter, vinegar, honey mustard, ranch, bacon, chicken, beef, cheese, ham, and peanut butter flavorings, nuts and seeds, vanilla, and chocolate products, dried vegetable flakes and herb flakes such as pepper, basil, thyme, peppermint, dried tomato, and parsley flakes, condiment flakes, fruit flakes, spices, cheese powders such as cheddar cheese and Nacho cheese seasoning powders, and mixtures thereof.

Production of the doughs of the present invention may be performed using conventional mixing equipment, such as in a dough mixer adapted for steam injection and open to the atmosphere, such as a Pearless or Shaffer mixer steam injection mixer, and conventional dough forming and machining equipment. To avoid lumping and to obtain at least substantially homogeneous hydration and dispersion of the protein component and the fiber component they may be admixed with water before steaming and before addition of flour so as to avoid any substantial protein denaturization or starch gelatinization. In embodiments of the invention, the protein component and the fiber component may be preblended to obtain a substantially homogeneous particulate mixture for mixing with the water, or all three ingredients may be admixed without preblending of the protein component and the fiber component to at least substantially homogeneously hydrate the protein component and the fiber component. In embodiments of the invention, other ingredients, such as salt and flavoring ingredients may be included in the hydration step which do not cause lumping.

In the hydration step, the protein component and the fiber component are at least substantially uniformly hydrated to obtain a substantially homogeneous hydrated mass of the protein component and the fiber component by admixing the protein component, the fiber component, and water at a temperature below the protein denaturization temperature of the protein component. Generally, protein denaturization occurs at temperatures above about 120°F, so the hydration is generally conducted at a temperature of less than about 120°F, for example from about 34°F to about 110°F, preferably from about 75°F to about 90°F. Mixing times to achieve substantial hydration of the protein component and the fiber component may generally range from about 2.5 minutes to about 5 minutes.

The at least substantially uniformly hydrated mass of the protein component and the fiber component may be steamed to a temperature above the denaturization temperature of the protein component. In embodiments of the invention, the steaming may be conducted to raise the temperature of the hydrated mass of the protein component and the fiber component to about 160°F to about 200°F, preferably from 170°F to about 190°F. Even though the steaming raises the temperature above the protein denaturization temperature, protein content and product quality of the baked goods are not adversely affected. The steaming of the hydrated mass of well dispersed protein and fiber has been found to unexpectedly provide a softer, non-hard texture in the baked goods. Steaming softens the fiber, making it less abrasive, and makes the protein less mealy or powdery, and improves the sensory characteristics such as taste and mouthfeel of the baked goods. It is also believed that the steaming raises the temperature of the ingredients which facilitates moisture removal during baking thereby helping to reduce baking temperatures and/or baking times so that overbaking or production of off-flavors and off-colors are avoided in baking to a shelf-stable moisture content.

The steaming may be conducted using steam at 212°F and atmospheric pressure (about 14.7 psia). Steaming times may range from about 8 minutes to about 18 minutes, until a target temperature for the steamed mass is attained. The temperature of the hydrated mass may be monitored during steaming or the temperature may be monitored periodically until the desired mass temperature is reached. The steaming may be conducted in a steaming and mixing vessel, such as a Schaffer dough mixer equipped with steam injection where steaming and mixing may both take place. The steaming generally adds some water due to steam condensation, in an amount of less than about 5% by weight of water, preferably from about 1% by weight to about 4% by weight of water, based upon the weight of the dough. The resulting steamed, hydrated mass may have a dough-like consistency.

The steamed, hydrated mass containing the protein component and the fiber component may be admixed with the remaining ingredients, such as sugars, shortening or fat, or oil, leavening agent, enzymes, flavoring ingredients, additional water, and the at least one flour comprising starch to obtain a dough while avoiding substantial gelatinization of starch of the at least one flour. These ingredients may be added in one or more stages. For example, in embodiments of the invention, the sugars leavening agent, and flavoring ingredients, may be admixed with the steamed hydrated mass in one stage, followed by addition of the at least one flour and enzymes, and additional water in the next stage, with the shortening or fat or oil being added in the last mixing stage to obtain the finished dough.

Avoidance of substantial starch gelatinization prior to baking helps to eliminate lump formation in the dough and a hard texture in the baked product, while providing a lower glycemic index (GI) in the baked product. Starch gelatinization is avoided by adding the flour ingredient after the protein and fiber hydration and steaming steps, so that the starch is not subjected to gelatinizing temperatures and easy access to water. Also, substantial starch gelatinization is avoided by admixing of the steamed hydrated mass with the remaining ingredients comprising at least one flour which are at a low enough temperature so that upon combining and mixing of the ingredients, the resulting dough has a dough temperature which is below the gelatinization temperature of starch. For example, the remaining ingredients are generally at a temperature below the gelatinization temperature of starch, preferably below about 170°F, most preferably at room temperature when added to the steamed hydrated mass so as to cool it upon mixing. However, excessive cooling is not desired because use of a hot dough helps to reduce baking times and/or baking temperatures. In embodiments of the invention, to help control dough temperature, the remaining ingredients can be added at different temperatures. For example, the additional water may be at a temperature of about 160°F, and the remaining ingredients, such as the flour may be at room temperature when added to the steamed, hydrated mass. In embodiments of the invention, the admixing of the steamed hydrated mass and the ingredients comprising at least one flour may result in a dough temperature which is from about 130°F to about 170°F, or it may be cooled, with or without using cooling equipment, to a temperature below about 130°F, for example to room temperature. The dough may be permitted to sit or lay in conventional manner and cool, or it may be machined with little or no lay time or little or no cooling.

In embodiments of the invention, baked goods having a high fiber content, or a high protein content may be produced in accordance with the process for producing baked goods with both high fiber and high protein contents. In such embodiments, the baked goods may have a protein content or a fiber content of at least about 4g per 30g serving, for example, from about 5g to about 20g per 30g serving, preferably from about 5g to about 10g per 30 gram serving. Hydration of the protein or the fiber prior to steaming and prior to addition of the at least one flour comprising starch avoids lumping and starch gelatinization. The steaming of the hydrated fiber before addition of the at least one flour softens the fiber, making it less abrasive and improves the sensory characteristics such as taste and mouthfeel of the high fiber baked goods. The steaming of the hydrated protein before addition of the at least one flour, makes the protein less mealy or powdery, and improves the sensory characteristics such as taste and mouthfeel of the high protein baked goods.

Various machining processes and equipment used in the production of crackers, snacks, and cookies may be employed to form the doughs of the present invention into pieces. For example, the doughs may be sheeted, wire cut, extruded, coextruded, cut, or rotary molded using conventional equipment. Machining can include the processes used in standard cracker technology. For example, the cracker doughs of the present invention may be sheeted, optionally laminated, then cut and baked. Alternative machining processes include the use of a tortilla machine in which the dough-like composition is rolled and formed into pieces without being laminated. In a preferred machining process, the dough is formed into a sheet by gauge or reduction rollers and optionally enters a dough-laminating machine, such as a cut-sheet laminator or sweep-arm laminator. The laminating operation can be performed by overlapping lamina of about one-fourth inch thickness each, such that one sheet is placed upon another. Typically, between 3 to 6 laminae are layered together during this operation. The laminate may be formed by folding the sheeted dough upon itself. Separate dough sheets may also be used to form a laminate. The optionally laminated dough sheet may then be reduced in thickness. Reduction of the dough sheet thickness may be performed in stages. For example, after three laminae are formed into a sheet, the sheet may then be compressed to about one-sixteenth inch. For four laminae, the dough sheet may first be reduced in thickness to about 1/2" and then to about 1/4". The reductions in thickness may be performed by the use of one or more sets of counterrotating reduction rolls. In either case, a final reduction in thickness is done by a gauge roller. The dough may be reduced during this operation to a final thickness of about 1/32 of an inch. At this point, the sheet may generally have a width-to-thickness ratio of at least about 350.

The dough sheet may then be cut into dough pieces. Cutting can be performed by a reciprocating cutter, a rotary cutter, or other dough-cutting mechanisms. The cut dough pieces may be circular, triangular, rectangular, or square in shape, irregular in shape, or any other desirable configuration.

Dockering or piercing the uncut sheet or cut pieces can optionally be included in the machining operation for production of crackers and crispy snacks. In addition to avoiding pillowing, dockering decreases the occurrence of "checking" or the formation of undesirable stress lines that cause breakage in the final product.

The cut pieces may then be conveyed or transported to a conventional oven, such as a multizone band oven or convection oven for baking. In embodiments of the invention, the dough sheeting, cutting, and dockering operations may occur at substantially the same dough temperatures and moisture contents as of the dough produced in the mixer. Thus, in embodiments of the invention, the dough pieces, upon entering a baking oven, may have a temperature of from about 130°F to about 170°F and a dough moisture content of preferably about 32% by weight to about 45 % by weight, based upon the weight of the dough for crispy or crunchy snack and cracker doughs, and from about 10% by weight to about 25% by weight, based upon the weight of the dough for cookies.

While baking times and temperatures will vary for different dough or batter formulations, oven types, etc., in general, commercial cracker-, cookie-, brownie- and cake-baking times may range from about 2.5 minutes to about 15 minutes, and baking temperatures may range from about 200°F (93°C) to about 700°F (371°C).

The baked products of the present invention may have a relative vapor pressure ("water activity") of less than about 0.7, preferably less than about 0.6, for preservative free microbial shelf-stability. The water content of the cracker products is generally less than about 6% by weight, for example, from about 0.25% by weight to about 4% by weight, preferably from about 2% by weight, to about 3% by weight, based upon the weight of the baked product, exclusive of inclusions. Cookie, brownie, cake, breadsticks, muffin, and croissant products generally have a moisture content of less than about 20% by weight, for example, from about 2% by weight to about 9% by weight for cookies, based upon the weight of the baked product, exclusive of inclusions.

In embodiments of the invention, after baking and drying or after frying, the pieces may be topped with conventional seasonings and topping oil, in conventional amounts, using conventional seasoning application equipment such as a rotating drum. Optional topping salt may be generally applied in conventional amounts after cutting or stamping and before baking.

In other embodiments of the present invention, the dough pieces, after having their moisture content reduced to less than about 10%, preferably less than about 5%, most preferably less than about 3.5% by weight, by heating in air, such as in a gas-fired oven, may be subjected to frying to enhance flavor while keeping the fat or oil content of the final product low.

The bakery products or baked goods which may be produced in accordance with the present invention include savory and sweet crackers and snacks, morning or breakfast snacks, crispy and crunchy snacks and soft snacks, such as crackers, graham crackers, cookies, croissants, muffins, cakes, cupcakes, soft or crispy breadsticks, chips, brownies, pizza crusts, pie crusts, breads, pretzels, pastries, sweet rolls, donuts, and tortillas. The snack products may include snack chips and extruded, puffed snacks. The food product particularly may be selected from crackers, cookies, and snack chips. The cookies may be bar-type products, extruded, coextruded, sheeted and cut, rotary molded, wire cut, or sandwich cookies. Exemplary of cookies which may be produced include sugar wafers, fruit filled cookies, chocolate chip cookies, oatmeal cookies, sugar cookies, and the like. The crackers may be fermented or non-fermented type crackers, and graham crackers. The baked goods produced in accordance with the present invention may be crackers or cookies having a full fat content or they may be a reduced fat, low-fat, or no-fat product.

The present invention is further illustrated in the following examples, where all parts, ratios, and percentages are by weight, and all temperatures are in °F, unless otherwise stated:

### EXAMPLE 1

The ingredients and their relative amounts, which may be used to produce a high protein high fiber cracker dough and cracker having a crisp texture using isolated soy protein in accordance with the present invention are:

| DOUGH INGREDIENT | PARTS BY WEIGHT | WEIGHT % |
|---|---|---|
| **STAGE 1** | | |
| Dough Salt | 0.88 | 0.318 |
| Isolated Soy Protein, SUPRO 313 | 18.00 | 6.510 |
| Isolated Soy Protein, SUPRO 320 | 18.00 | 6.510 |
| Resistant Starch Type III, PROMITOR | 20.00 | 7.233 |
| Oat Fiber | 16.00 | 5.787 |
| Guar Gum | 0.65 | 0.235 |
| Water, 80°F | 70.00 | 25.317 |
| Flavor and coloring | 0.066 | 0.024 |
| **STAGE 2** | | |
| High Fructose Corn Syrup | 3.33 | 1.204 |
| Malt Syrup | 4.17 | 1.508 |
| Sugar | 12.00 | 4.340 |
| Defatted Wheat Germ | 3.13 | 1.132 |
| Calcium Phosphate | 0.56 | 0.203 |
| Sodium Bicarbonate | 0.28 | 0.101 |
| Ammonium Bicarbonate | 1.25 | 0.452 |
| Water for ammonium bicarbonate | 2.00 | 0.723 |
| Onion Powder | 0.50 | 0.181 |
| **STAGE 3** | | |
| Graham Flour | 30.00 | 10.850 |
| Wheat Flour | 50.00 | 18.083 |
| Enzymes, proteolytic, amylytic | 0.013 3 | 0.005 |
| Water, 160°F | 20.00 | 7.233 |
| **STAGE 4** | | |
| Soybean Oil | 5.67 | 2.051 |
| **TOTAL** | 276.499 | 100.000 |

The Supro® 320 and Supro® 3 13isolated soy protein are produced by Solae LLC, North America of St. Louis MO. The Supro® 313 has 87.5g protein, and 381 kcal per 100g of product. The Supro® 320 has 87.0g protein, and 384 kcal per 100g of product.

The dough may be produced by first adding the Stage I ingredients except for the Stage 1 water and flavoring and coloring to a Shaffer mixer equipped with steam injection, and mixing the ingredients for about 30 seconds at about 40 rpm mixer speed at room temperature. Next, the Stage 1 water which is at about 80°F may be added to mixer with the flavoring and coloring dissolved in about 11b of the water, and mixing may be continued for three minutes at about 40 rpm mixer speed. Then, while mixing the hydrated ingredients at about 20 rpm, steam may be injected into the mixer at about 212°F and atmospheric pressure for about 13 minutes until a target temperature for the steamed, hydrated mixture of about 180°F is obtained.

The Stage 2 ingredients at room temperature, may then be added to the Stage I ingredients with mixing for about two minutes at about 36 rpm. Next, the Stage 3 ingredients which are all at room temperature except for the Stage 3 water which is at 160°F may be added with mixing being continued for 3 minutes at 20 rpm. The Stage 4 ingredient which is at room temperature may then be added with mixing for an additional 3 minutes at 20 rpm to obtain a substantially homogeneous dough having a temperature of about 140°F.

The dough may then be fed, without any lay time, to conventional cracker dough sheeting equipment to continuously produce a dough sheet without lumps and without tearing. The dough sheet may be cut into pieces in conventional manner. The pieces may be baked in a multizone direct gas fired 32 inch wide band oven having six temperature zones at temperatures of from about 200°F to about 700°F. The pieces may be baked using a baking time of about 5 minutes to obtain crispy textured crackers with a moisture content of about 2.5% by weight, based upon the weight of the cracker. The crackers may be topped with salt in an amount of about 1% by weight, and oil in an amount of about 7.7% by weight, based upon the weight of the dough.

### EXAMPLE 2

The ingredients and their relative amounts, which may be used to produce a high protein high fiber cracker dough and cracker having a crisp texture using pea protein and wheat protein isolate in accordance with the present invention are:

| DOUGH INGREDIENT | PARTS BY WEIGHT | WEIGHT % |
|---|---|---|
| **STAGE 1** | | |
| Dough Salt | 0.88 | 0.334 |
| Pea Protein, FARMAX 785 | 19.00 | 7.211 |
| Wheat Protein Isolate, Prolite 200 | 19.00 | 7.211 |
| Resistant Starch Type III, PROMITOR | 20.00 | 7.590 |
| Oat Fiber | 16.00 | 6.072 |
| Guar Gum | 0.65 | 0.247 |
| Water, 80°F | 60.00 0.066 | 22.770 0.025 |
| Flavor and coloring | | |
| **STAGE 2** | | |
| High Fructose Com Syrup | 3.33 | 1.264 |
| Malt Syrup | 4.17 | 1.583 |
| Sugar | 12.00 | 4.554 |
| Defatted Wheat Germ | 3.13 | 1.188 |
| Calcium Phosphate | 0.56 | 0.213 |
| Sodium Bicarbonate | 0.28 | 0.106 |
| Ammonium Bicarbonate | 1.25 | 0.474 |
| Water for ammonium bicarbonate | 2.00 | 0.759 |
| Onion Powder | 0.50 | 0.190 |
| **STAGE 3** | | |
| Graham Flour | 30.00 | 11.385 |
| Wheat Flour | 50.00 | 18.975 |
| Enzymes, proteolytic, amylytic | 0.013 | 0.005 |
| Water, 160°F | 15.00 | 5.693 |
| **STAGE 4** | | |
| Soybean Oil | 5.67 | 2.152 |
| **TOTAL** | 263.499 | 100.000 |

The FarMax™ 785 pea protein isolate is produced by Farbest Brands, a division of Farbest-Tallman Foods Corporation, Montvale, NJ. FarMax™ 785 pea protein isolate has a minimum of 83.0g protein, total fat of 5g, ash of 5.0g, moisture of 6.0 g; and 381 kcal per 100g of product. The Prolite™ 200 is produced by ADM, Decatur, Illinois, and it is a wheat protein isolate has 81.0g protein (dry basis), 1.9g insoluble fiber, 0.5g soluble fiber, 5g total carbohydrate, 3.5 g moisture, and 390 kcal per 100g of product.

The dough may be produced by first adding the Stage I ingredients except for the Stage I water and flavoring and coloring to a Shaffer mixer equipped with steam injection, and mixing the ingredients for about 30 seconds at about 40 rpm mixer speed at room temperature. Next, the Stage 1 water which is at about 80°F may be added to mixer with the flavoring and coloring dissolved in about 1 1b of the water, and mixing may be continued for three minutes at about 40 rpm mixer speed. Then, while mixing the hydrated ingredients at about 20 rpm, steam may be injected into the mixer at about 212°F and atmospheric pressure for about 13 minutes until a target temperature for the steamed, hydrated mixture of about 180°F is obtained.

The Stage 2 ingredients at room temperature, may then be added to the Stage 1 ingredients with mixing for about two minutes at about 36 rpm. Next, the Stage 3 ingredients which are all at room temperature except for the Stage 3 water which is at 160°F may be added with mixing being continued for 3 minutes at 20 rpm. The Stage 4 ingredient which is at room temperature may then be added with mixing for an additional 3 minutes at 20 rpm to obtain a substantially homogeneous dough having a temperature of about 140°F.

The dough may then be fed, without any lay time, to conventional cracker dough sheeting equipment to continuously produce a dough sheet without lumps and without tearing. The dough sheet may be cut into pieces in conventional manner. The pieces may be baked in a multizone direct gas fired 32 inch wide band oven having six temperature zones at temperatures of from about 200°F to about 700°F. The pieces may be baked using a baking time of about 5 minutes to obtain crispy textured crackers with a moisture content of about 2.5% by weight, based upon the weight of the cracker. The crackers may be topped with salt in an amount of about 1% by weight, and oil in an amount of about 7.7% by weight, based upon the weight of the dough.

### EXAMPLE 3

The ingredients and their relative amounts, which may be used to produce a high protein high fiber cracker dough and cracker having a crisp texture using milk protein in accordance with the present invention are:

| DOUGH INGREDIENT | PARTS BY WEIGHT | WEIGHT % |
|---|---|---|
| **STAGE 1** | | |
| Dough Salt | 0.88 | 0.334 |
| Milk Protein Isolate, BARPRO 291 | 36.00 | 13.662 |
| Resistant Starch Type III, PROMITOR | 20.00 | 7.590 |
| Oat Fiber | 16.00 | 6.072 |
| Guar Gum | 0.65 | 0.247 |
| Water, 80°F | 57.00 | 21.632 |
| Flavor and coloring | 0.066 | 0.025 |
| **STAGE 2** | | |
| High Fructose Com Syrup | 3.33 | 1.264 |
| Malt Syrup | 4.17 | 1.583 |
| Sugar | 12.00 | 4.554 |
| Defatted Wheat Germ | 3.13 | 1.188 |
| Calcium Phosphate | 0.56 | 0.213 |
| Sodium Bicarbonate | 0.28 | 0.106 |
| Ammonium Bicarbonate | 1.25 | 0.474 |
| Water for ammonium bicarbonate | 2.00 | 0.759 |
| Onion Powder | 0.50 | 0.190 |
| **STAGE 3** | | |
| Graham Flour | 30.00 | 11.385 |
| Wheat Flour | 50.00 | 18.975 |
| Enzymes, proteolytic, amylytic | 0.013 | 0.005 |
| Water, 160°F | 20.00 | 7.590 |
| **STAGE 4** | | |
| Soybean Oil | 5.67 | 2.152 |
| **TOTAL** | 263.499 | 100.000 |

The BarPro™ 291 is a partially hydrolyzed milk protein isolate produced by Glanbia Nutritionals, Monroe, Wisconsin. BarPro™ 291 milk protein isolate has 88.31g protein, total fat of 0.69g, sugars 0.48g, total carbohydrate of 1.8g, 6.0g moisture, pH and 365 kcal per 100g of product, and a pH of 5.5.

The dough may be produced by first adding the Stage 1 ingredients except for the Stage 1 water and flavoring and coloring to a Shaffer mixer equipped with steam injection, and mixing the ingredients for about 30 seconds at about 40 rpm mixer speed at room temperature. Next, the Stage 1 water which is at about 80°F may be added to mixer with the flavoring and coloring dissolved in about 1 lb of the water, and mixing may be continued for three minutes at about 40 rpm mixer speed. Then, while mixing the hydrated ingredients at about 20 rpm, steam may be injected into the mixer at about 212°F and atmospheric pressure for about 13 minutes until a target temperature for the steamed, hydrated mixture of about 180°F is obtained.

The Stage 2 ingredients at room temperature, may then be added to the Stage 1 ingredients with mixing for about two minutes at about 36 rpm. Next, the Stage 3 ingredients which are all at room temperature except for the Stage 3 water which is at 160°F may be added with mixing being continued for 3 minutes at 20 rpm. The Stage 4 ingredient which is at room temperature may then be added with mixing for an additional 3 minutes at 20 rpm to obtain a substantially homogeneous dough having a temperature of about 140°F.

The dough may then be fed, without any lay time, to conventional cracker dough sheeting equipment to continuously produce a dough sheet without lumps and without tearing. The dough sheet may be cut into pieces in conventional manner. The pieces may be baked in a multizone direct gas fired 32 inch wide band oven having six temperature zones at temperatures of from about 200°F to about 700°F. The pieces may be baked using a baking time of about 5 minutes to obtain crispy textured crackers with a moisture content of about 2.5% by weight, based upon the weight of the cracker. The crackers may be topped with salt in an amount of about 1% by weight, and oil in an amount of about 7.7% by weight, based upon the weight of the dough.

### EXAMPLE 4

A high protein high fiber cracker dough and cracker having a crisp texture may be produced as in Examples 1, 2, and 3 except a stabilized whole grain flour may be substituted for the graham flour.

### COMPARATIVE EXAMPLE 1

The ingredients and their relative amounts, which may be used to produce a high protein high fiber cracker dough using isolated soy protein are:

| DOUGH INGREDIENT | PARTS BY WEIGHT | WEIGHT % |
|---|---|---|
| **STAGE 1** | | |
| Dough Salt | 0.88 | 0.278 |
| Isolated Soy Protein, SUPRO 313 | 18.00 | 5.687 |
| Isolated Soy Protein, SUPRO 320 | 18.00 | 5.687 |
| Resistant Starch Type III, PROMITOR | 20.00 | 6.319 |
| Oat Fiber | 16.00 | 5.055 |
| Guar Gum | 0.65 | 0.205 |
| Water, 160°F | 130.00 | 41.074 |
| Flavor and coloring | 0.066 | 0.021 |
| **STAGE 2** | | |
| High Fructose Corn Syrup | 3.33 | 1.052 |
| Malt Syrup | 4.17 | 1.318 |
| Sugar | 12.00 | 3.791 |
| Defatted Wheat Germ | 3.13 | 0.989 |
| Calcium Phosphate | 0.56 | 0.177 |
| Sodium Bicarbonate | 0.28 | 0.088 |
| Ammonium Bicarbonate | 1.25 | 0.395 |
| Water for ammonium bicarbonate | 2.00 | 0.632 |
| Onion Powder | 0.50 | 0.158 |
| **STAGE 3** | | |
| Graham Flour | 30.00 | 9.479 |
| Wheat Flour | 50.00 | 15.798 |
| Enzymes, proteolytic, amylytic | 0.013 | 0.004 |
| **STAGE 4** | | |
| Soybean Oil | 5.67 | 1.791 |
| **TOTAL** | 316.499 | 100.000 |

The Supro® 320 and Supro® 313isolated soy protein are produced by Solae LLC, North America of St. Louis MO. The Supro® 313 has 87.5g protein, and 381 kcal per 100g of product. The Supro® 320 has 87.0g protein, and 384 kcal per 100g of product.

The dough may be produced by first adding the Stage 1 ingredients except for the Stage 1 water and flavoring and coloring to a Shaffer mixer equipped with steam injection, and mixing the ingredients for about 30 seconds at about 40 rpm mixer speed at room temperature. Next, the Stage 1 water which is at about 160°F may be added to mixer with the flavoring and coloring dissolved in about 1 lb of the water, and mixing may be continued for three minutes at about 40 rpm mixer speed. Then, while mixing the hydrated ingredients at about 20 rpm, steam may be injected into the mixer at about 212°F and atmospheric pressure for about 10 minutes until a target temperature for the steamed, hydrated mixture of about 190°F is obtained.

The Stage 2 ingredients at room temperature, may then be added to the Stage 1 ingredients with mixing for about two minutes at about 36 rpm. Next, the Stage 3 ingredients which are all at room temperature may be added with mixing being continued for 3 minutes at 20 rpm. The Stage 4 ingredient which is at room temperature may then be added with mixing for an additional 3 minutes at 20 rpm to obtain a dough having a temperature of about 131°F. The dough exhibits poor protein dispersibility and protein lumps.

The invention will now be described by reference to the following numbered clauses:
1. A method for producing a high protein, high fiber dough comprising admixing a protein component, a fiber component, and water at a temperature below the protein denaturization temperature of the protein component to at least substantially uniformly hydrate the protein component and the fiber component and obtain a substantially homogeneous hydrated mass of the protein component and the fiber component, steaming the hydrated mass to a temperature above the denaturization temperature of the protein component, and admixing the steamed, hydrated mass with ingredients comprising at least one flour comprising starch to obtain a dough while avoiding substantial gelatinization of starch of said at least one flour.
2. A method as claimed in clause 1 wherein the protein component, the fiber component, and the water are admixed at a temperature of less than about 120°F to obtain the hydrated mass of the protein component and the fiber component, said dough having a protein component content of from about 8% by weight to about 22% by weight, based upon the weight of the dough, and a fiber content of from about 8% by weight to about 18% by weight, based upon the weight of the dough.
3. A method as claimed in clause 1 or clause 2, wherein the steaming is conducted to raise the temperature of the hydrated mass of the protein component and the fiber component to about 160°F to about 200°F.
4. A method as claimed in clause 3, wherein said admixing of said steamed hydrated mass and said ingredients comprising at least one flour results in dough temperature which is below the gelatinization temperature of starch.
5. A method as claimed in clause 4 wherein said admixing of said steamed hydrated mass and said ingredients comprising at least one flour results in a dough temperature which is from about 130°F to about 170°F, wherein said protein component comprises at least one member selected from the group consisting of milk protein, soy protein, pea protein, wheat protein, whey protein, and bean protein, and wherein said fiber component comprises at least one member selected from the group consisting of resistant starches, oligosaccharides, bran, cellulosic material, gums, beta-glucans, vegetable fiber, legume fiber, oat fiber, polydextrose, and resistant maltodextrins.
6. A method for making a high protein and/or high fiber baked good comprising admixing at least one component selected from the group consisting of protein components and fiber components with water at a temperature of less than about 120°F to at least substantially uniformly hydrate the at least one component and obtain a substantially homogenous hydrated mass, steaming the hydrated mass to a temperature of from about 160°F to about 200°F, admixing the steamed, hydrated mass with ingredients comprising at least one flour comprising starch to obtain a dough while avoiding substantial gelatinization of starch of said at least one flour, sheeting the dough, forming the dough into pieces, and baking the pieces to obtain a baked good having a protein content of at least about 4g protein per 30g serving and/or a fiber content of at least about 4g fiber per 30g serving.

## Claims

1. A method for making a high protein, high fiber baked good comprising:
(a) admixing a protein component and a fiber component to obtain an at least substantially homogenous preblended particulate mixture,
(b) admixing the preblended particulate mixture with water at a temperature below the protein denaturization temperature of the protein component to at least substantially uniformly hydrate the protein component and the fiber component and obtain a substantially homogenous hydrated mass of the protein component and the fiber component,
(c) steaming the hydrated mass to a temperature above the denaturization temperature of the protein component,
(d) admixing the steamed, hydrated mass with ingredients comprising at least one flour comprising starch to obtain a dough while avoiding substantial gelatinization of starch of said at least one flour,
(e) sheeting the dough,
(f) forming the dough into pieces, and
(g) baking the pieces to obtain a baked good having a protein content of at least about 4g protein per 30g serving and a fiber content of at least about 4g fiber per 30g serving.

2. A method as claimed in claim 1 wherein the protein component, the fiber component, and the water are admixed at a temperature of less than about 120°F to obtain the hydrated mass of the protein component and the fiber component or wherein the protein component, the fiber component and the water are admixed at a temperature of from about 75°F to about 90°F to obtain the hydrated as of the protein component and the fiber component.

3. A method as claimed in claim 1 or 2, wherein the steaming is conducted to raise the temperature of the hydrated mass of the protein component and the fiber component to about 160°F to about 200°F or wherein the steaming is conducted to raise the temperature of the hydrated mass of the protein component and the fiber component to about 170°F to about 190°F.

4. A method as claimed in any of claims 1 - 3, wherein said admixing of said steamed hydrated mass and said ingredients comprising at least one flour results in a dough temperature which is below the gelatinization temperature of starch or wherein said admixing of said steamed hydrated mass and said ingredients comprising at least one flour results in a dough temperature which is from about 130°F to about 170°F.

5. A method as claimed in any of claims 1 - 4 wherein the dough is laminated.

6. A method as claimed in any of claims 1 - 5 wherein said protein component comprises at least one member selected from the group consisting of milk protein, soy protein, pea protein, wheat protein, whey protein and bean protein.

7. A method as claimed in any of claims 1 - 6 wherein said fiber component comprises at least one member selected from the group consisting of resistant starches, oligosaccharides, bran cellulosic material, gums, beta-glucans, vegetable fiber, legume fiber, oat fiber, polydextrose and resistant maltodextrins.

8. A method as claimed in any of claims 1 - 7, wherein said baked good is a cracker having protein content of from about 5g to about 10g per 30g serving.

9. A method as claimed in any of claims 1 - 8, wherein said at least one flour comprises graham flour and wheat flour or wherein said at least one flour comprises at least one whole grain flour in an amount of at least about 4g per 30g serving.

10. A method as claimed in any of claims 1 - 9, wherein said baked good is a sweet or savory snack, or a soft snack having a protein content of about 5g to about 10g per 30g serving, a fiber content of from about 5g to about 8g per 30g serving, and a whole grain flour content of from about 5g to about 10g per 30g serving.

11. A method as claimed in any of claims 1 - 10 wherein said steaming adds less than about 5% by weight of water, based upon the weight of the dough.

12. A method as claimed in any of claims 1 -11 wherein the calorie content of the baked good is from about 90 kcal to about 140 kcal per 30g serving.

13. A high protein, high fiber, sheetable dough comprising an at least substantially homogenous mixture of:
(a) a protein component;
(b) a fiber component;
(c) at least one flour comprising starch; and
(d) water
the sheetable dough being bakable to a baked good having a protein content of at least about 4g protein per 30g serving, and fiber content of at least about 4g fiber per 30g serving, wherein the starch is protected from enzymatic digestion by entrapment in a protein-fiber mask.

14. A baked good baked from the sheetable dough of claim 13.

15. A baked good as claimed in claim 14, which is selected from the group consisting of crackers, cookies, croissants, muffins, cakes, cupcakes, breadsticks, sweet snacks and savory snacks, said baked good having a protein content of from about 5g to about 10g per 30g serving, a fiber content of from about 5g to about 8g per 30g serving, a whole grain flour content of from about 5g to about 10g per 30g serving, and a calorie content of from about 90 kcal per 30g serving to about 140 kcal per 30g serving.
